# EUROPÄISCHE PATENTANMELDUNG

(11) **EP 1 197 547 A2**
(43) Veröffentlichungstag der Anmeldung: **17.04.2002**
(21) Anmeldenummer: 01124175.9
(22) Anmeldetag: 10.10.2001
(51) Int. Cl.: C12G 3/06

(54) **Heissgetränk**

(30) Priorität: 10.10.2000 DE 10050320
(71) Anmelder: Hödl, Walter, 94148 Kirchheim (DE)
(72) Erfinder: Hödl, Walter, 94148 Kirchheim (DE)
(74) Vertreter: Winter, Brandl, Fürniss, Hübner, Röss, Kaiser, Polte Partnerschaft

(57) **Zusammenfassung**

Offenbart ist ein alkoholhaltiges Heißgetränk und ein Verfahren zum Herstellen eines derartigen Heißgetränks, das aus zumindest 50 Volumenprozent Bier und einem Anteil an Fruchststoff- oder Pflanzenstoffkonzentrat, vorzugsweise Kirschsirup besteht.

## Beschreibung

Die Erfindung betrifft ein alkoholhaltiges Heißgetränk gemäß dem Oberbegriff des Patentanspruchs 1 und ein Verfahren zu dessen Herstellung.

Bei einer anklingenden Erkältung mit einsetzender Heiserkeit wird zur Bekämpfung der Erkrankung häufig ein Naturheilmittel verwendet, gemäß dem Bier auf Kochtemperatur erwärmt wird und dieses erwärmte Bier als Heilmittel getrunken oder mit dem erwärmten Bier gegurgelt wird. Die Durchsetzung dieses Naturheilmittels scheitert im Wesentlichen jedoch daran, daß der Geschmack des erhitzten Bieres den meisten Patienten unangenehm ist, so daß auf herkömmliche Arzneien ausgewichen wird.

Aus der Homepage http://www-test.studentenwerk-goettingen.de/mensa_spezial/135/bierpunsch ist es bekannt, erwärmtes Bier zur Herstellung eines sogenannten Bierpunsches zu verwenden. Bei diesem bekannten Bierpunsch werden Zitrone, Zimt, Zucker, Eigelb, Sahne, Rum und Starkbier gemischt und schaumig geschlagen. Es handelt sich um ein ausgesprochenes Partygetränk, das aufgrund seines außerordentlich hohen Alkoholgehaltes nur selten getrunken wird. Die Herstellung ist darüber hinaus nur für Kleinstmengen möglich, da die einzelnen Komponenten, zur Entmischung neigen und das Gemisch nicht längere Zeit lagerfähig ist.

Dem gegenüber liegt der Erfindung die Aufgabe zugrunde, ein auf Bier basierendes Heißgetränk und ein Verfahren zu dessen Herstellung zu schaffen, wobei bei einfacher Herstellung ein guter Geschmack gewährleistet sein soll.

Diese Aufgabe wird hinsichtlich des alkoholhaltigen Heißgetränkes durch die Merkmalskombination des Patentanspruchs 1 und hinsichtlich des Verfahrens durch die Merkmalskombination des nebengeordneten Patentanspruchs 7 gelöst.

Erfindungsgemäß besteht das alkoholhaltige Heißgetränk aus einem Anteil von zumindest 50 Volumenprozent Bier, sowie einem Fruchtstoff- oder Pflanzenstoffkonzentrat. Dabei wird es bevorzugt, ein Fruchtstoffkonzentrat zu verwenden, wobei die Wahl des Konzentrates individuell an die bevorzugte Geschmacksrichtung der Verbraucher angepaßt werden kann.

Das erfindungsgemäße Heißgetränk zeichnet sich durch einfache Herstellbarkeit aus und hat durch die Einstellbarkeit der Geschmacksrichtung einen je nach Verbrauchergeschmack wählbaren, sehr guten Geschmack, wobei das Getränk auch als Heilmittel im Sinne der vorstehenden Ausführungen einsetzbar ist.

Das erfindungsgemäße Heißgetränk ist durch Mischen von herkömmlichem Bier und dem Frucht- oder Pflanzenstoffkonzentrat möglich, wobei nach einem Homogenisieren der Mischung am Ausschankort ein Erwärmen der Mischung auf die vorgesehene Abgabetemperatur erfolgt.

Die Herstellung des Getränks ist besonders einfach, wenn das Konzentrat aus einem Sirup, das heißt in der Regel Mono- und Disaccharide in hoher Konzentration vorliegt. Je nach Anwendungsfall sind dabei alle bekannten Siruparten einsetzbar. Bei ersten Tests hat es sich jedoch herausgestellt, daß insbesondere Kirschsirup eine besonders gute Geschmacksabrundung ermöglicht, so daß das Warmgetränk nach anfänglicher Skepsis vom Verbraucher sehr gut angenommen wird.

Der Volumenanteil des Konzentrats liegt vorzugsweise zwischen 10 und 2 Volumenprozent, wobei bei der Verwendung von eingedicktem Kirschsaft (Sirup) ein Volumenanteil von 6 Prozent als besonders geeignet erscheint.

Als Grundstoff wird vorzugsweise helles Bier verwendet, prinzipiell sind jedoch auch sämtliche anderen, bekannten Bierarten einsetzbar.

Um ein Ausdampfen des Wasseranteils zu verhindern, ist es besonders vorteilhaft, wenn das Heißgetränk in einem geschlossenen System oder in einem Durchlauferhitzer erwärmt wird.

Im folgenden wird ein bevorzugtes Ausführungsbeispiel der Erfindung anhand eines schematischen Ablaufdiagramms näher erläutert.

Mit diesem Ablaufdiagramm werden die Grundkomponenten einer Anlage 1 zur Herstellung des Heißgetränkes erläutert. Die Hauptbestandteile des im folgenden näher beschriebenen Heißgetränkes sind Bier und eingedickter Kirschsaft, im folgenden Sirup genannt. Die beiden Komponenten sind beispielsweise in zwei Vorratsbehältern 2 bzw. 4 aufgenommen und werden über eine nicht dargestellte Dosieranlage in einem Mischungsverhältnis von 94 Volumenprozent Bier und 6 Volumenprozent Kirschsirup abgezogen und einem Mischbehälter 6 zugeführt. In diesem Mischbehälter 6 erfolgt ein Verteilen des Kirschsirups im Bier, wobei dieser Homogenisierschritt durch einen Rührer symbolisiert wird. Diese Mischung kann beispielsweise bereits in einer Brauerei oder aber auch erst vor Ort hergestellt werden.

Unter dem Begriff Bier wird dabei jegliches Biergetränk verstanden, das im wesentlichen aus Bierextrakt, Alkohol, Kohlensäure und Wasser besteht. Das heißt, prinzipiell sind (nach der früheren Bezeichnung) Einfachbiere, Schankbiere, Vollbiere, Starkbiere, sogenannte Lückenbiere und prinzipiell auch alkoholfreie Biere einsetzbar. Bei ersten Tests stellte sich heraus, daß der Geschmack bei der Verwendung von herkömmlichen hellen Bieren (Pilsener, Dortmunder, helle Münchner) besonders gut ist.

Wie bereits eingangs erwähnt, kann anstelle des Kirschsirups auch ein anderes geeignetes Frucht- oder Pflanzenstoffkonzentrat, beispielsweise andere Fruchtarten eingesetzt werden, die je nach Geschmacksrichtung wählbar sind. Dabei kann es in Abhängigkeit von der Geschmacksintensität des einzelnen Konzentrats erforderlich sein, die eingangs genannten Mischungsanteile zu verändern. In der Regel dürfte jedoch der Anteil an Bier zumindest 50 Volumenprozent betragen.

Die Mischung wird dann in einem anschließenden Schritt, beispielsweise in einem Wärmetauscher 8 auf die Abgabe- oder Trinktemperatur gebracht, wobei die Abgabetemperatur in der Regel über 50 Grad Celsius, vorzugsweise im Bereich von etwa 80 Grad Celsius liegt.

Um ein Ausdampfen des Wassers und des Alkohols und somit ein Eindicken des Gemisches zu verhindern, ist die Erwärmung in geschlossenen Systemen oder über einen Durchlauferhitzer zu bevorzugen. Im letztgenannten Fall wird nur der Anteil erhitzt, der tatsächlich am Ausschank 10 ausgegeben wird.

Das erfindungsgemäße Heißgetränk kann insbesondere in der "kalten Jahreszeit" als normales Getränk anstelle von Glühwein etc. verwendet werden, prinzipiell ist jedoch auch der Einsatz als Heilmittel möglich.

Offenbart ist ein alkoholhaltiges Heißgetränk und ein Verfahren zum Herstellen eines derartigen Heißgetränks, das aus zumindest 50 Volumen- oder Gewichtsprozent Bier und einem Anteil an Fruchststoff- oder Pflanzenstoffkonzentrat, vorzugsweise Kirschsirup besteht.

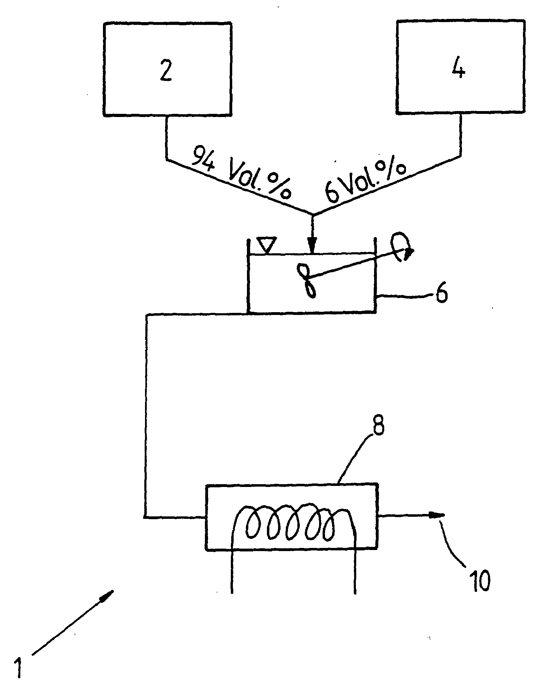

## Patentansprüche

1. Alkoholhaltiges Heißgetränk mit einem Anteil von zumindest 50 Prozent Bier und einem Anteil an Geschmacksstoff, **dadurch gekennzeichnet, daß** der Geschmacksstoff ein Frucht- oder Pflanzenstoffkonzentrat ist.

2. Alkoholhaltiges Heißgetränk nach Patentanspruch 1, wobei das Konzentrat Fruchtsirup ist.

3. Alkoholhaltiges Heißgetränk nach Patentanspruch 2, wobei der Fruchtsirup überwiegend aus Kirschen hergestellt ist.

4. Alkoholhaltiges Heißgetränk nach Patentanspruch 2 oder 3, wobei der Anteil an Konzentrat zwischen 2 und 10 Volumenprozent, vorzugsweise 6 Volumenprozent ist.

5. Alkoholhaltiges Heißgetränk nach einem der vorhergehenden Patentansprüche, wobei die Temperatur des Getränkes etwa 40 bis 90 Grad Celsius beträgt.

6. Alkoholhaltiges Heißgetränk nach einem der vorhergehenden Patentansprüche, wobei das Bier ein helles Bier ist.

7. Verfahren zum Herstellen eines Heißgetränkes mit den Schritten:
- Herstellen einer Mischung bestehend aus zumindest 50 Prozent Bier und einem Anteil an Frucht- oder Pflanzenstoffkonzentrat,
- Homogenisieren der Mischung und
- Erwärmen der Mischung auf eine Temperatur von über 50 Grad Celsius.

8. Verfahren nach Patentanspruch 7, wobei als Frucht- oder Pflanzenstoff ein Sirup, vorzugsweise Kirschsirup verwendet wird.

9. Verfahren nach Patentanspruch 7 oder 8, wobei die Mischung in einem Durchlauferhitzer erwärmt wird.
